# EUROPEAN PATENT SPECIFICATION

(11) **EP 4 037 522 B1**
(45) Date of publication and mention of the grant of the patent: **24.04.2024**
(21) Application number: 20793142.9
(22) Date of filing: 23.09.2020
(51) Int. Cl.: A45D 8/00, A45D 8/36, G02C 11/02

(54) **HAIR CLIP DEVICE AND KIT COMPRISING THE SAME**
HAARKLAMMERVORRICHTUNG UND KIT DAMIT
DISPOSITIF FORMANT PINCE À CHEVEUX ET KIT LE COMPRENANT

(30) Priority: 23.09.2019 IT 201900017027
(43) Date of publication of application: 10.08.2022
(73) Proprietor: Laveglia Service Societa' a Responsabilita' Limitata, 15057 Tortona (AL) (IT)
(72) Inventor: CICCHIRILLO, Doriane, 15010 Rivalta Bormida AL (IT)
(74) Representative: Soranzo, Benedetta
(86) International application number: PCT/IB2020/058867
(87) International publication number: WO 2021/059147

(56) References cited:
- WO-A1-2018/129468
- DE-C- 416 702
- US-A- 5 528 320
- US-A1- 2014 071 397
- US-A1- 2016 116 760

## Description

The present invention relates to a hair clip device and kit comprising the same. In particular, the present invention relates to a hair clip device and kit comprising the same, which has a structure resembling that of a pair of eye-glasses and which allows extensive and simple personalization thereof. Nowadays hair clip devices with a curved form, also called "hairbands", are known, these being apt to surround partially the user's head so as to retain the hair in a predetermined style.

A drawback of these hair clip devices consists in the fact that they completely fix the hair at least as regards the locks of hair with which they engage.

They in fact do not allow partial retention of the hair, namely a retaining action which limits but does not hinder the normal fluidity of the hair.

These hair clip devices are therefore suitable for use if a high degree of staticity of the hair is required.

Nowadays it is also known for persons wearing eye-glasses or sunglasses to use them as hair clip devices. DE 416 702 C discloses such eye-glasses.

The intrinsic structure of the glasses, however, is mainly unsuitable for efficiently performing the function of a hair clip device.

If nothing else, because the nosepiece tends to press against the scalp, creating discomfort for the user, if not pain.

Therefore, when the glasses are removed from the hair, they tend to get caught up with the latter, typically in the region of the nosepiece, so that they tend to upset the stable appearance of a particular hairstyle.

The problem underlying the present invention is that of providing a hair clip device and kit comprising the same which is able to overcome the aforementioned drawbacks, allowing the hair to be partially retained in such a way as to favor the fluidity thereof, while allowing it to be kept stably in place.

The main task of the present invention consists in providing a hair clip device and kit comprising the same, able to provide a solution to said problem, while overcoming the drawbacks associated with the conventional solutions described above.

In connection with this task it is an object of the present invention to propose a hair clip device and kit comprising the same which, when worn, is stable and allow the hair to be stably retained, while allowing the partial mobility and fluidity thereof.

Another object of the present invention consists in providing a hair clip device and kit comprising the same which is able to engage with parts of the user's head so as to form areas where the hair is kept pressed, arranged alternately with areas merely defining a space suitable for receiving the hair.

Yet another object of the invention consists in proposing a hair clip device which may be easily personalized.

A further object of the invention consists in providing a hair clip device which may be folded up or has small dimensions and which is structurally simple and easy to use.

This task, as well as these and other objects which will become clearer below are achieved by a hair clip device or kit comprising the same according to the attached independent claims.

Detailed characteristics of the hair clip device and kit comprising said device according to the invention are contained in the corresponding dependent claims.

Further characteristic features and advantages will emerge more clearly form the description of a preferred, but non-exclusive embodiment of a hair clip device and kit comprising said device according to the invention, shown by way of a non-limiting example in the attached sets of drawings in which:
- Figure 1 shows a perspective view of a hair clip kit according to the present invention;
- Figure 2 shows a perspective view of a detail of a hair clip device according to the present invention;
- Figure 3a shows a plan view, from above, of the detail of Figure 2;
- Figure 3b shows a plan view, from above, of the detail of Figures 2 and 3, in an open position;
- Figure 4 shows a variant of the detail of Figures 2, 3a and 3b;
- Figures 5 to 8 show constructional details of possible embodiments of the present invention.

With particular reference to the said figures, 100 denotes overall a hair clip kit according to the present invention.

This hair clip kit 100 comprises a hair clip device 10, described more fully below, and a plurality of ornamental elements 11a, 11b and 11c which differ in terms of aesthetic appearance so as to modify the appearance of the hair clip device 10 when they are coupled interchangeably together with the hair clip device 10.

The latter, according to the present invention, in general comprises:
- a front element 12 extending between a first extremity 12a and a second extremity 12b, along a development direction A;
- two lateral elements 13, 14 each provided with a first free end 13a, 14a configured to rest on the base of a user's auricle;
- at least one ornamental element 11a, 11b and 11c.

The ornamental element 11a, 11b and 11c may be fixed to the front element 12 and/or to the lateral elements 13, 14 in a removable manner so as to be interchangeable and/or may comprises lenses for eye-glasses or sunglasses. The ornamental element 11a, 11b, 11c may extend between a first extremity 11a', 11b', 11c' and a second extremity 11a", 11b", 11c", along a development direction A.

The hair clip device 10 may also comprise:
- articulation means 15 fixed to the front element 12 and to the lateral elements 13, 14 and configured to connect each of the lateral elements 13, 14 to one of the ends of the front element 12 so as to allow a rotation of the lateral elements 13, 14 with respect to the front element 12 between an open position and a closed position;
- locking means - generally indicated by the reference letter B in the attached figures - which are configured to retain the lateral elements 13, 14 in the open position with respect to the front element 12.

The articulation means 15 may comprise hinges which may be of the type, known per se, used to hingeably mount the side arms onto a front element of an eye-glasses frame.

The front element 12 of a hair clip device 10, according to the present invention, is devoid of lenses and/or a nosepiece.

Nosepiece, in the present text, is understood as meaning in general any member configured to define an anatomical support for a user's nose.

In the aforementioned closed position, the lateral elements 13 and 14 are arranged on top of each other and rest on the front element 12 so as to minimize the overall size of the hair clip device 10.

In the open position, instead, the lateral elements 13 and 14 may form with the front element 12, at least in the vicinity of the articulation means 15, an angle which may substantially range between 60° and 120° and is optionally equal to about 90° or situated within a range of +10° to -10° about said value.

The at least one ornamental element 11a, 11b or 11c may be able to be removably coupled with the front element 12 so as to be interchangeable.

In this way the hair clip device 10 may be easily and quickly personalized by interchanging the ornamental elements 11a, 11b or 11c which may be included in the aforementioned hair clip kit 100.

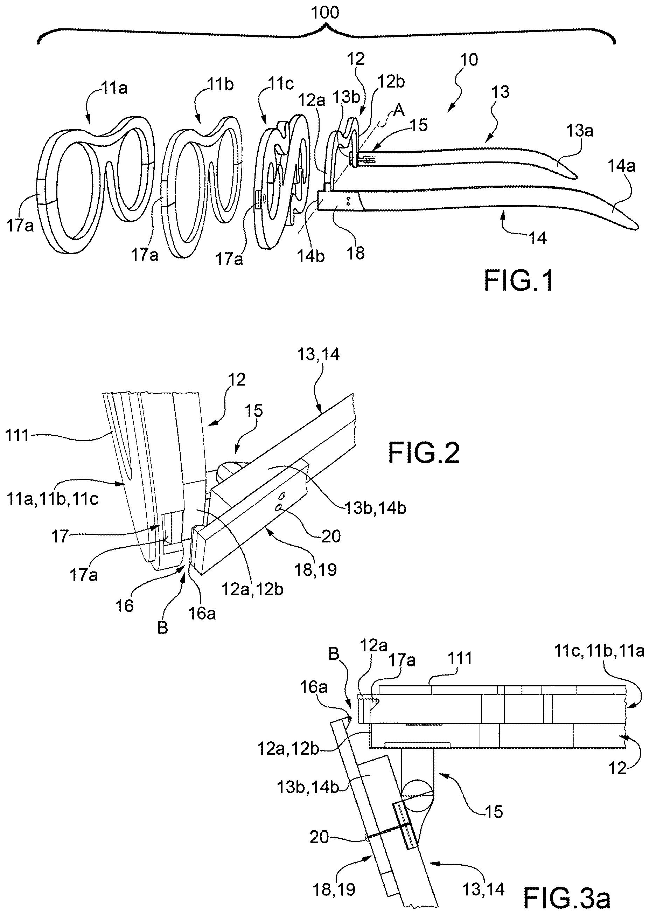

Figure 1 shows by way of a non-limiting example ornamental elements 11a, 11b and 11c which are apt to be coupled, alternately or at the same time, with the front element 12.

However, in further possible embodiments of the present invention, all to be considered as falling within the scope of protection of the attached claims, the said ornamental elements may also (or only) be apt to be coupled with the said lateral elements.

The front element 10, and specifically its development direction A, may be substantially curved or rectilinear and likewise the lateral elements 13 and 14 may extend along a curved and/or rectilinear direction.

The locking means B may comprise first retaining elements 16 and second retaining elements 17. The first retaining elements 16 may be fixable or fixed to the lateral elements 13, 14, while the second retaining elements 17 may be fixable or fixed to the front element 12 and/or to the ornamental element 11a, 11b, 11c.

In particular, the first retaining elements 16 may be fixable or fixed to a second end 13b, 14b of the lateral elements 13, 14 opposite to the first end 13a, 14a. The second retaining elements 17 may be fixable or fixed to the first end 12a and to the second end 12b, correspondingly, of the front element 12. Alternatively or in addition, the second retaining elements 17 may be fixable or fixed to the first extremity 11 a', 11b', 11c' and to the second extremity 11 a", 11b", 11c" of the ornamental element 11a, 11b or 11c.

The first and second retaining elements 16 and 17 may be positioned on the lateral elements 13, 14 and on the front element 12 and/or on the ornamental element 11a, 11b, 11c so that:
- in said open position, the first retaining elements 16 engage with the second retaining elements 17; and
- in said closed position, the first and second retaining elements 16 and 17 are not operative, namely they are not engaged together.

The retaining elements 16 and 17 may be magnetic or magnetically reactive so that they can be coupled together magnetically.

Alternatively, the retaining elements 16 and 17 may be configured so that they can be coupled together mechanically, for example by means of snap-engagement.

Furthermore, the retaining elements 16 and 17 may be both magnetic or magnetically reactive so that they can be coupled together magnetically and also configured to be coupled together mechanically.

The retaining elements 16, 17 may respectively comprise a tooth 16a and a recess 17a which complement each other.

The tooth 16a and the recess 17a may be positioned so that, in the open position, the tooth 16a engages the recess 17a being coupled with it so that, once they are engaged, the mechanical cooperation between tooth 16a and recess 17a opposes the movement out of the open position and consequently the movement into the closed position.

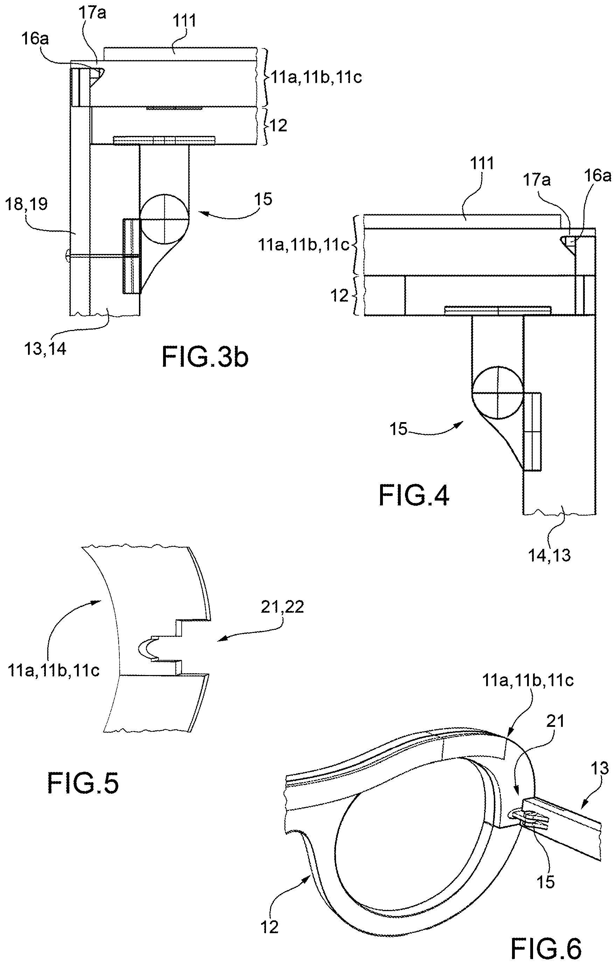

The tooth 16a or recess 17a may be integral with each of the lateral elements 13, 14, as for example shown in the non-limiting example of Figure 4.

In this case, for example, the tooth 16a may project from each lateral element 13, 14 or from a protuberance integral therewith, so as to engage, in the open position, inside the corresponding recess 17a.

Alternatively, as shown by way of a non-limiting example in Figures 2, 3a and 3b, the teeth 16a may be integral with an additional component 18, 19 which can be fixed to the lateral elements 13, 14.

Each additional component 18, 19 may be fixed to a corresponding lateral element 13, 14 removably, for example by means of screws 20, or in a fixed manner, for example by means of welding.

In general, the recess 17a may be formed on an end face of the first extremity 12a and the second extremity 12b of the front element 12.

Said end face may be substantially perpendicular to a development direction A such that the recess will extend essentially parallel to the development direction A or, at least along a direction which will have a non-zero component along the development direction A.

Clearly, the recess instead may be formed on a front face, namely a face which during use is "visible" and extends substantially parallel to the development direction A or, in any case, in a direction not perpendicular to the latter.

In this case the lateral elements 13 and 14 will be suitably configured to extend so that the corresponding teeth 16a are in an ideal position for engagement with the recesses 17a when the open position is reached.

In the case where the teeth 16a are provided on the additional components 18 and 19, clearly the latter will be formed in the manner described above.

In the example described here, by way of a non-limiting example, the teeth 16a project from the lateral elements 13 and 14 or from the additional components 18, 19 fixed thereto, and the recesses 17a described are provided on the front element 12, however, the reverse solution kinematically speaking also falls within the scope of the present disclosure, namely the solution where the teeth 16a project from the front element 12 or from an additional component thereof and the recesses 17a are formed on the lateral elements 13, 14, the description given hitherto also being applicable, mutatis mutandis.

In a further embodiment, shown by way of a non-limiting example in the attached Figures 1 to 4, still within the scope of the present disclosure, the recesses 17a, or the teeth 16a, may be provided on one of the said ornamental elements 11a, 11b or 11c so that the movement of the lateral elements 13, 14 into the closed position is followed by the engagement of the teeth 16a with the recesses 17a and simultaneous locking, in the open position, of the lateral elements 13, 14 with respect to the front element 12 and the retention of said ornamental element 11a, 11 or 11c on the said front element 12.

In other words, either one of said tooth 16a and said recess 17a is associated or may be associated with the lateral elements 13, 14 and the other one of said recess 17a or tooth 16a may be provided on the front element 12 or on the ornamental element 11a, 11b, 11c so that the movement of the lateral elements 13, 14 into the closed position is followed by the engagement of the teeth 16a with the recesses 17a and the simultaneous locking, in the open position, of the lateral elements 13, 14 with respect to the front element 12 and the retention of the ornamental element 11a, 11b or 11c on the said front element 12.

In general, the recess 17a may be formed on an end face of the extremity of the ornamental element 11a, 11b or 11c.

Similarly to that already described further above, said end face may be substantially perpendicular to the development direction A such that the recess 17a will extend essentially parallel to the development direction A or, at least along a direction which will have a non-zero component along the development direction A.

The recess 17a may instead be formed on a front face 111 of the ornamental element 11a, 11b or 11c which extends substantially parallel to the development direction A or in any case, not perpendicular to the latter.

In this case the lateral elements 13 and 14 will be suitably configured to extend so that the corresponding teeth 16a are in an suitable position for engaging with the recesses 17a when the open position is reached.

In the case where the teeth 16a are provided on the additional components 18 and 19, clearly the latter will be suitably formed.

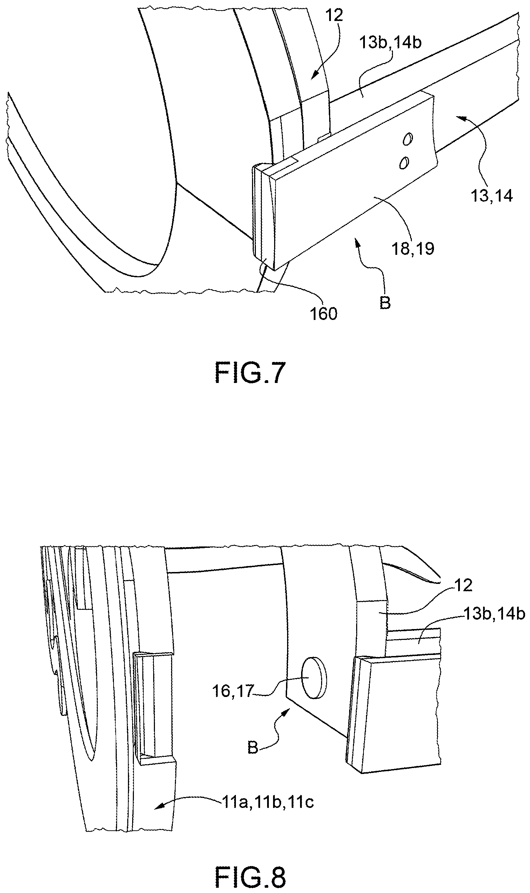

As shown by way of example in Figure 7, the locking means B may also comprise a cantilever element 160 which may consist of a bracket-shaped or toothed-shaped portion configured to be arranged, in the open position of the lateral elements 13 and 14, at least partly on the front element 12 and/or on an ornamental element 11a, 11b, 11c.

The cantilever element 160 may extend at least mainly along the development direction A.

The cantilever element 160 may be fixed to a second extremity 13b, 14b of each lateral element 13, 14 in a removable manner, for example by means of screws 20, or may be integral with, namely be made as one piece with, a second extremity 13b, 14b of the latter.

Alternatively, the cantilever element 160 may be integral with one of said additional elements 18, 19.

Therefore, the cantilever element 160 is configured so that, when a lateral element 13, 14 which carries it is in the open position, it engages part of the front face of the front element 12 or the front face 111 of the ornamental element 11a, 11b or 11c.

In particular, the retaining action of the lateral elements 13 and 14 in the open position is provided by at least the mechanical form-fitting interaction between the cantilever element 160 and the front element 12 or an ornamental element 11a, 11b or 11c.

The ornamental element 11a, 11b or 11c may be autonomous with respect to the front element 12 and means may be provided for temporarily fixing the ornamental element 11a, 11b or 11c to the front element 12 and/or to the lateral elements 13 and/or 14 (not shown in the attached figures).

Said means for fixing the ornamental element 11a, 11b or 11c to the front element 12 and/or to the lateral elements 13 and/or 14 may be magnetic means or mechanical means, such as ratchet elements which are apt to snap-engage, namely by means of momentary elastic deformation, with correspondingly counter-shaped undercuts in a manner known per se and not shown in the attached figures.

The hair clip device 10 may also comprise auxiliary aesthetic elements which may differ in terms of aesthetic appearance from the ornamental element 11a, 11b or 11c so as to modify the appearance of said hair clip device 10 when they are applied or interchanged.

In fact, said auxiliary aesthetic elements may consist for example of additional accessories, such as charms or rhinestones, which act as further aesthetic characterization elements apt to help personalize and/or make more attractive the aesthetic appearance of the hair clip device 10.

The auxiliary aesthetic elements may be configured to be fixed or coupled together with the front element 12 and/or the lateral elements 13, 14 and/or one or more ornamental elements 11a, 11b or 11c in a magnetic and/or mechanical, interchangeable or stable manner. The ornamental element 11a, 11b or 11c may be configured to be coupled together with the front element 12 when the lateral elements 13, 14 are in the open position and to lock the lateral elements 13, 14 in the open position.

For this purpose, for example, the ornamental element 11a, 11b or 11c may comprise shaped ends 21, 22 apt to be coupled with the articulation means 15, when the lateral elements 13, 14 are in the open position, so as to lock the articulation means 15 and prevent or oppose the movement of the lateral elements 13, 14 from the open position.

In this case the locking means B may consist of said shaped ends 21, 22 or will include them.

As already mentioned above, the development direction A may be substantially rectilinear and the lateral elements 13, 14 may each extend along a corresponding extension direction which may, in turn, be substantially rectilinear and which, in said open position, may be substantially perpendicular to the development direction A.

In this way, both the front element 12 and the lateral elements 13 and 14 will be apt to engage with a user's head only in limited zones and, specifically, an upper central zone of the skull, which is engaged during use by the central element 12, and a zone in the region of the temples, which is engaged by each lateral element 13, 14.

Thus the hair, except in the aforementioned zones, will be contained by the hair clip device according to the present invention, but not compressed against the head so as to allow it to maintain its natural mobility and fluidity.

The front element 12 and the lateral elements 13, 14 may be integral with each other and joined by an articulation part, which is elastically or plastically deformable so as to allow the relative movement of the front element 12 and the said lateral elements 13, 14.

In this case, the articulation means 15 will be formed by said articulation part.

Or else, the front element 12 and the lateral elements 13, 14 will be joined together and will form a single body or will be fixed together so that they cannot be adjusted directionally with respect to each other during normal use of the hair clip device 10.

The front element 12 and the lateral elements 13, 14 may also have areas which are covered with a material suitable for preventing sliding on the user's head, for example areas covered with silicone.

These areas may be provided in positions of the front element 12 and the lateral elements 13, 14 which are intended to come into contact with the user's head when the hair clip device 10 is worn.

The front element 12 and the lateral elements 13, 14 may also be connected together removably so that the lateral elements 13, 14 are interchangeable with respect to the front element 12 and vice versa.

Moreover, the front element 12 and/or the lateral elements 13, 14 may be at least partially curved so as to have at least a concave portion with respect to the space apt to receive the user's head, this space being partially surrounded by the front element 12 and by the lateral elements 13, 14 when they are in the open position.

The hair clip device 10 or the hair clip kit 10 may also include an electric or electronic device, such as a battery, a video camera, a photographic camera, earphones, a global positioning system (GPS), a bar code reader or QR code reader.

Said electronic device may be fixed or coupled, stably or removably, together with a housing seat in the hair clip device 10.

The hair clip device 10 may comprise at least one housing seat apt to receive or support or connect said electronic device. This housing seat may be formed on a lateral element 13, 14 and/or on the front element 12, and/or on an ornamental element 11a, 11b or 11c, for example it may be formed inside a lateral element 13, 14 and/or the front element 12 and/or an ornamental element 11a, 11b or 11c or inside a container component fixed thereto.

A hair clip kit 100, according to the present invention, may also comprise a plurality of said auxiliary aesthetic elements, where said auxiliary aesthetic elements may differ in terms of aesthetic appearance so as to modify the appearance of the hair clip device 10 when they are applied or interchanged.

Alternatively, at least one of said auxiliary aesthetic elements and at least one of said ornamental elements may be aesthetically complementary, so as to form a set apt to give a harmonious appearance to a hair clip device 10 which includes them.

It can therefore be understood how a hair clip device 10 and kit 100 comprising said device, according to the present invention, is able to overcome the drawbacks mentioned above, allowing partial retention of the hair in such a way as to favor the fluidity thereof, while allowing it to be stably retained.

In detail, a hair clip device 10 and kit 100 comprising said device, according to the invention, when worn, is stable and allows the hair to be stably retained, while allowing the partial mobility and fluidity thereof.

Therefore a hair clip device 10 and kit 100 comprising said device, according to present invention, is able to engage with parts of the user's head so as to form certain areas where the hair is kept pressed, arranged alternately with areas merely defining a space suitable for receiving the hair.

Furthermore, a hair clip device 10 and kit 100 comprising said device, according to the present invention, may be easily personalized.

Last but not least, an advantage of a hair clip device 10 and kit 100 comprising the latter, according to the present invention, is that it may be folded or has small dimensions and is structurally simple and easy to use.

In practice the materials used as well as the associated forms and dimensions may be varied depending on the particular requirements and the state of the art. Where the constructional characteristics and the techniques mentioned in the following claims are followed by reference numbers or symbols, these reference numbers or symbols have been assigned with the sole purpose of facilitating understanding of the said claims and consequently they do not limit in any way the interpretation of each element which is identified, purely by way of example, by said reference numbers or symbols.

## Claims

1. Hair clip device (10) comprising:
- a front element (12) extending between a first extremity (12a) and a second extremity (12b), along a development direction (A); said front element (12) is devoid of lenses and/or of a nosepiece;
- two lateral elements (13, 14) each provided with a free first end (13a, 14a) configured to rest on the base of a user's auricle;
- at least one ornamental element (11a, 11b, 11c) which can be fixed to said front element in a removable way so as to be interchangeable;
- articulation means (15) fixed to said front element (12) and to said lateral elements (13, 14) and configured to connect each of said lateral elements (13, 14) to one of said extremities (12a, 12b) of the front element (12) so as to allow a rotation of said lateral elements (13, 14) with respect to said front element (12) between an open position and a closed position; wherein in said closed position the lateral elements (13, 14) are arranged on top of each other and rest on the front element 12 so as to minimize the overall size of the hair clip device 10
- locking means (B) configured to retain said lateral elements (13, 14) in said open position with respect to said front element (12);
wherein said locking means (B) comprise alternatively (a) first and second retaining elements (16, 17) or (b) a cantilever element (160);
wherein for alternative (a) said first retaining elements (16) are fixable or fixed to said lateral elements (13, 14) and said second retaining elements (17) are fixable or fixed to said ornamental element (11a, 11b, 11c); said first and second retaining elements (16, 17) being positioned on said lateral elements (13, 14) and on said ornamental element (11a, 11b, 11c) in such a way that:
- in said open position, said first retaining elements (16) engage said second retaining elements (17);
- in said closed position said first retaining elements (16) and said second retaining elements (17) are not operative and not engaged together;
wherein for alternative (b) said cantilever element (160) extends mainly, rectilinearly or substantially rectilinearly, along said development direction (A) and wherein said cantilever element (160) is integral with or removably fixable to a second extremity (13b, 14b) of said lateral elements (13, 14) or is integral with an additional component (18, 19) connectable to said lateral elements (13, 14) and said cantilever element (160) is configured to overlap at least partially said ornamental element (11a, 11b, 11c) when said lateral elements (13, 14) are in said open position.

2. Hair clip device (10) according to claim 1, wherein for said alternative (a) said retaining elements (16, 17) are magnetic or magnetically reactive so that they can be magnetically coupled together and/or are configured to be mechanically coupled together.

3. Hair clip device (10) according to claim 1 or 2, wherein for said alternative (a) said first retaining elements (16) are fixable or fixed to a second end (13b, 14b) of said lateral elements (13, 14), opposite to the first end (13a, 14a), and wherein said second retaining elements (17) are fixable or fixed to said first extremity (12a) and to said second extremity (12b), correspondingly, of said front element (12) and/or wherein said ornamental element (11a, 11b, 11c) extends between a first extremity (11 a', 11b', 11 c') and a second extremity (11a", 11b", 11c"), along the development direction A, and said second retaining elements (17) are fixable or fixed to said first extremity (11a', 11b', 11c') and second extremity (11a", 11b", 11c") of the ornamental element.

4. Hair clip device (10) according to claim 3, wherein for said alternative (a) said retaining elements (16, 17) comprise a tooth (16a) and a recess (17a), mutually complementary, arranged such that in said open position said tooth (16a) engages said recess (17a) being coupled with it so as to oppose the movement into said closed position; wherein said tooth (16a) or said recess (17a) are integral with each of said lateral elements (13, 14) or are integral with an additional component (18, 19) fixable to said lateral elements (13, 14).

5. Hair clip device (10) according to claim 4, wherein either one of said recess (17a) or said tooth (16a) is provided on said at least one ornamental element (11a, 11b or 11c) and/or on said front element (12) so that the movement into the closed position of the lateral elements (13, 14) is followed by the engagement of said tooth (16a) with said recess (17a) and the simultaneous locking in the closed position of the lateral elements (13, 14) with respect to the front element (12) and the retention of said ornamental element (11a, 11b or 11c) together with said front element (12).

6. Hair clip device (10) according to one of the preceding claims, wherein said ornamental element (11a, 11b, 11c) is autonomous with respect to said front element (12) and means are provided for temporarily fixing said ornamental element (11a, 11b, 11c) to said front element (12), said means being magnetic means or mechanical means.

7. Hair clip device (10) according to one of the preceding claims, comprising auxiliary aesthetic elements configured to be fixed or coupled together with said front element (12) and/or said lateral elements (13, 14) and/or an ornamental element (11a, 11b, 11c) in a magnetic and/or mechanical manner and interchangeable or stable manner.

8. Hair clip device (10) according to one of the preceding claims, wherein said ornamental element (11a, 11b, 11c) is configured to be coupled with said front element (12) when said lateral elements (13, 14) are in said open position and to lock said lateral elements (13, 14) in said open position.

9. Hair clip device (10) according to one of the preceding claims, wherein said development direction (A) is substantially rectilinear and each of said lateral elements (13, 14) extends along its own extension direction which is substantially rectilinear and wherein, in said open position, said extension direction is substantially perpendicular to said development direction (A).

10. Hair clip device (10) according to one of the preceding claims, wherein said front element (12) and said lateral elements (13, 14) are mutually integral and joined by an articulation part, elastically or plastically deformable to allow the relative movement of said front element (12) and said lateral elements (13, 14).

11. Hair clip device (10) according to one of the preceding claims, wherein said front element (12) and said lateral elements (13, 14) have areas covered by a material suitable for preventing sliding on the user's head, for example areas covered with silicone; said areas being arranged in positions of said front element (12) and said lateral elements (13, 14) designed to come into contact with the user's head when said hair clip device (10) is worn.

12. Hair clip device (10) according to one of the preceding claims, wherein said front element (12) and said lateral elements (13, 14) are connected together in a detachable way so that said lateral elements (13, 14) are interchangeable with respect to said front element (12) and vice versa.

13. Hair clip device (10) according to one of the preceding claims, wherein said front element (12) and/or said lateral elements (13, 14) are at least partially curved so as to have at least one concave portion with respect to the space for receiving the user's head, which is partially surrounded by said front element (12) and by said lateral elements (13, 14) when they are in said open position.

14. Hair clip device (10) according to one of the preceding claims comprising an electric or electronic device.

15. Hair clip device (10) according to one of the preceding claims, comprising at least one seat for housing an electric or electronic device on a lateral element (13, 14) and/or on the front element 12 and/or on an ornamental element (11a, 11b or 11c).

16. Hair clip kit (100) comprising a hair clip device (10) according to one of claims 1 to 15 and a plurality of said ornamental elements (11a, 11b, 11c) wherein the ornamental elements (11a, 11b, 11c) of said plurality differ in appearance so as to modify the appearance of said hair clip device (10) when they are interchanged.

17. Hair clip kit (100) according to claim 16, wherein said hair clip device (10) is made according to claim 6 and said hair clip kit comprises a plurality of said auxiliary aesthetic elements, wherein said auxiliary aesthetic elements differ in appearance so as to modify the appearance of said hair clip device (10) when they are applied or interchanged.

18. Hair clip kit (100) according to claim 17, wherein at least one of said auxiliary aesthetic elements and at least one of said ornamental elements (11a, 11b, 11c) are aesthetically complementary so as to form a set able to give a harmonious aesthetic appearance to a hair clip device (10) which includes them.

## Patentansprüche

1. Haarclip-Vorrichtung (10), umfassend:
- ein vorderes Element (12), das sich zwischen einer ersten Extremität (12a) und einer zweiten Extremität (12b) entlang einer Entwicklungsrichtung (A) erstreckt; das vordere Element (12) frei von Linsen und/oder einem Nasensteg ist;
- zwei seitliche Elemente (13, 14), die jeweils mit einem freien ersten Ende (13a, 14a) versehen sind, das konfiguriert ist, um auf der Basis einer Ohrmuschel eines Benutzers zu ruhen;
- mindestens ein Zierelement (11a, 11b, 11c), das auf eine abnehmbare Weise an dem vorderen Element befestigt werden kann, um austauschbar zu sein;
- Gelenkverbindungsmittel (15), die an dem vorderen Element (12) und an den seitlichen Elementen (13, 14) befestigt und konfiguriert sind, um jedes der seitlichen Elemente (13, 14) mit einem der Extremitäten (12a, 12b) des vorderen Elements (12) zu verbinden, um eine Drehung der seitlichen Elemente (13, 14) hinsichtlich des vorderen Elements (12) zwischen einer offenen Position und einer geschlossenen Position zu ermöglichen; wobei in der geschlossenen Position, die seitlichen Elemente (13, 14) übereinander angeordnet sind und auf dem vorderen Element 12 aufliegen, um die Gesamtgröße der Haarclip-Vorrichtung 10 zu minimieren
- Verriegelungsmittel (B), die konfiguriert sind, um die seitlichen Elemente (13, 14) in der offenen Position hinsichtlich des vorderen Elements (12) zu halten;
wobei die Verriegelungsmittel (B) alternativ (a) erste und zweite Halteelemente (16, 17) oder (b) ein Auskragungselement (160) umfassen;
wobei für eine Alternative (a) die ersten Halteelemente (16) an den seitlichen Elementen (13, 14) befestigbar oder befestigt sind und die zweiten Halteelemente (17) an dem Zierelement (11a, 11b, 11c) befestigbar oder befestigt sind; wobei die ersten und die zweiten Halteelemente (16, 17) auf den seitlichen Elementen (13, 14) und auf dem Zierelement (11a, 11b, 11c) derart positioniert sind, dass:
- in der offenen Position, die ersten Halteelemente (16) in die zweiten Halteelemente (17) eingreifen;
- in der geschlossenen Position, die ersten Halteelemente (16) und die zweiten Halteelemente (17) nicht betriebsfähig sind und nicht miteinander in Eingriff stehen;
wobei für die Alternative (b) das Auskragungselement (160) sich hauptsächlich geradlinig oder im Wesentlichen geradlinig entlang der Entwicklungsrichtung (A) erstreckt und wobei das Auskragungselement (160) an einer zweiten Extremität (13b, 14b) der seitlichen Elemente (13, 14) integral oder entfernbar befestigbar ist oder mit einer zusätzlichen Komponente (18, 19) integral ist, die mit den seitlichen Elementen (13, 14) verbindbar ist, und das Auskragungselement (160) konfiguriert ist, um mindestens teilweise das Zierelement (11a, 11b, 11c) zu überlappen, wenn sich die seitlichen Elemente (13, 14) in der offenen Position befinden.

2. Haarclip-Vorrichtung (10) nach Anspruch 1, wobei für die Alternative (a) die Halteelemente (16, 17) magnetisch oder magnetisch reaktiv sind, so dass sie magnetisch miteinander gekoppelt werden können und/oder konfiguriert sind, um mechanisch miteinander gekoppelt zu werden.

3. Haarclip-Vorrichtung (10) nach Anspruch 1 oder 2, wobei für die Alternative (a) die ersten Halteelemente (16) an einem zweiten Ende (13b, 14b) der seitlichen Elemente (13, 14) befestigbar oder befestigt sind, das dem ersten Ende (13a, 14a) gegenüberliegt, und wobei die zweiten Halteelemente (17) entsprechend an der ersten Extremität (12a) und an der zweiten Extremität (12b) des vorderen Elements (12) befestigbar oder befestigt sind und/oder wobei sich das Zierelement (11a, 11b, 11c) entlang der Entwicklungsrichtung A zwischen einer ersten Extremität (11a', 11b', 11c') und einer zweiten Extremität (11a", 11b", 11c") erstreckt und die ersten und die zweiten Halteelemente (17) an der ersten Extremität (11a', 11b', 11c') und der zweiten Extremität (11a", 11b", 11c") des Zierelements befestigbar oder befestigt sind.

4. Haarclip-Vorrichtung (10) nach Anspruch 3, wobei für die Alternative (a) die Halteelemente (16, 17) einen Zahn (16a) und eine Aussparung (17a) umfassen, die, zueinander komplementär, derart angeordnet sind, dass der Zahn (16a) in der offenen Position in die Aussparung (17a) eingreift, die mit ihr gekoppelt ist, um der Bewegung in die geschlossene Position entgegenzuwirken; wobei der Zahn (16a) oder die Aussparung (17a) mit jedem der seitlichen Elemente (13, 14) integral sind oder mit einer zusätzlichen Komponente (18, 19) integral sind, die an den seitlichen Elementen (13, 14) befestigbar ist.

5. Haarclip-Vorrichtung (10) nach Anspruch 4, wobei entweder eines von der Aussparung (17a) oder dem Zahn (16a) auf dem mindestens einen Zierelement (11a, 11b oder 11c) und/oder auf dem vorderen Element (12) bereitgestellt ist, sodass die Bewegung in die geschlossene Position der seitlichen Elemente (13, 14) durch den Eingriff des Zahns (16a) mit der Aussparung (17a) und das gleichzeitige Verriegeln in der geschlossenen Position der seitlichen Elemente (13, 14) hinsichtlich des vorderen Elements (12) und das Halten des Zierelements (11a, 11b oder 11c) zusammen mit dem vorderen Element (12) folgt.

6. Haarclip-Vorrichtung (10) nach einem der vorstehenden Ansprüche, wobei das Zierelement (11a, 11b, 11c) hinsichtlich des vorderen Elements (12) autonom ist und Mittel zum temporären Befestigen des Zierelements (11a, 11b, 11c) an dem vorderen Element (12) bereitgestellt sind, wobei die Mittel magnetische Mittel oder mechanische Mittel sind.

7. Haarclip-Vorrichtung (10) nach einem der vorstehenden Ansprüche, umfassend zusätzliche ästhetische Elemente, die konfiguriert sind, um mit dem vorderen Element (12) und/oder den seitlichen Elementen (13, 14) und/oder einem Zierelement (11a, 11b, 11c) in magnetischer und/oder mechanischer Weise und austauschbar oder in stabiler Weise befestigt oder miteinander gekoppelt zu werden.

8. Haarclip-Vorrichtung (10) nach einem der vorstehenden Ansprüche, wobei das Zierelement (11a, 11b, 11c) konfiguriert ist, um mit dem vorderen Element (12) gekoppelt zu werden, wenn sich die seitlichen Elemente (13, 14) in der offenen Position befinden und die seitlichen Elemente (13, 14) in der offenen Position verriegeln.

9. Haarclip-Vorrichtung (10) nach einem der vorstehenden Ansprüche, wobei die Entwicklungsrichtung (A) im Wesentlichen geradlinig ist und jedes der seitlichen Elemente (13, 14) sich entlang seiner eigenen Erstreckungsrichtung erstreckt, die im Wesentlichen geradlinig ist und wobei, in der offenen Position, die Erstreckungsrichtung im Wesentlichen senkrecht zu der Entwicklungsrichtung (A) ist.

10. Haarclip-Vorrichtung (10) nach einem der vorstehenden Ansprüche, wobei das vordere Element (12) und die seitlichen Elemente (13, 14) miteinander integral und durch ein Gelenkverbindungsteil verbunden sind, elastisch oder plastisch verformbar sind, um die relative Bewegung des vorderen Elements (12) und der seitlichen Elemente (13, 14) zu ermöglichen.

11. Haarclip-Vorrichtung (10) nach einem der vorstehenden Ansprüche, wobei das vordere Element (12) und die seitlichen Elemente (13, 14) Bereiche aufweisen, die durch ein Material abgedeckt sind, das geeignet ist, um ein Gleiten auf dem Kopf des Benutzers zu verhindern, zum Beispiel von Bereichen, die mit Silikon bedeckt sind; wobei die Bereiche in Positionen des vorderen Elements (12) angeordnet sind und die seitlichen Elemente (13, 14) ausgelegt sind, um mit dem Kopf des Benutzers in Kontakt zu kommen, wenn die Haarclip-Vorrichtung (10) getragen wird.

12. Haarclip-Vorrichtung (10) nach einem der vorstehenden Ansprüche, wobei das vordere Element (12) und die seitlichen Elemente (13, 14) auf eine lösbare Weise miteinander verbunden sind, sodass die seitlichen Elemente (13, 14) hinsichtlich des vorderen Elements (12) austauschbar sind und umgekehrt.

13. Haarclip-Vorrichtung (10) nach einem der vorstehenden Ansprüche, wobei das vordere Element (12) und/oder die seitlichen Elemente (13, 14) mindestens teilweise gekrümmt sind, um mindestens einen konkaven Abschnitt hinsichtlich des Raums zum Aufnehmen des Kopfes des Benutzers aufzuweisen, der teilweise durch das vordere Element (12) und durch die seitlichen Elemente (13, 14) umgeben ist, wenn sie sich in der offenen Position befinden.

14. Haarclip-Vorrichtung (10) nach einem der vorstehenden Ansprüche, umfassend eine elektrische oder elektronische Vorrichtung.

15. Haarclip-Vorrichtung (10) nach einem der vorstehenden Ansprüche, umfassend mindestens einen Sitz zum Unterbringen einer elektrischen oder elektronischen Vorrichtung auf einem seitlichen Element (13, 14) und/oder an dem vorderen Element 12 und/oder auf einem Zierelement (11a, 11b oder 11c).

16. Haarclip-Kit (100), umfassend eine Haarclip-Vorrichtung (10) nach einem der Ansprüche 1 bis 15 und eine Vielzahl der Zierelemente (11a, 11b, 11c), wobei sich die Zierelemente (11a, 11b, 11c) der Vielzahl in einem Erscheinungsbild unterscheiden, um das Erscheinungsbild der Haarclip-Vorrichtung (10) zu modifizieren, wenn sie ausgetauscht werden.

17. Haarclip-Kit (100) nach Anspruch 16, wobei die Haarclip-Vorrichtung (10) nach Anspruch 6 hergestellt ist und das Haarclip-Kit eine Vielzahl der zusätzlichen ästhetischen Elemente umfasst, wobei sich die zusätzlichen ästhetischen Elemente in dem Erscheinungsbild unterscheiden, um das Erscheinungsbild der Haarclip-Vorrichtung (10) zu modifizieren, wenn sie angewendet oder ausgetauscht werden.

18. Haarclip-Kit (100) nach Anspruch 17, wobei mindestens eines der zusätzlichen ästhetischen Elemente und mindestens eines der Zierelemente (11a, 11b, 11c) ästhetisch komplementär sind, um einen Satz auszubilden, der in der Lage ist, einer Haarclip-Vorrichtung (10), die diese einschließt, ein harmonisches Erscheinungsbild zu verschaffen.

## Revendications

1. Dispositif de pince à cheveux (10) comprenant :
- un élément avant (12) s'étendant entre une première extrémité (12a) et une seconde extrémité (12b), le long d'une direction de développement (A) ; ledit élément avant (12) étant dépourvu de verres et/ou d'une plaquette ;
- deux éléments latéraux (13, 14) chacun fourni avec une première extrémité libre (13a, 14a) conçue pour reposer sur la base d'un pavillon d'utilisateur ;
- au moins un élément ornemental (11a, 11b, 11c) qui peut être fixé audit élément avant de façon amovible afin d'être interchangeable ;
- des moyens d'articulation (15) fixés audit élément avant (12) et auxdits éléments latéraux (13, 14) et conçus pour relier chacun desdits éléments latéraux (13, 14) à l'une desdites extrémités (12a, 12b) de l'élément avant (12) afin de permettre une rotation desdits éléments latéraux (13, 14) par rapport audit élément avant (12) entre une position ouverte et une position fermée ; dans lequel dans ladite position fermée les éléments latéraux (13, 14) sont agencés les uns au-dessus des autres et reposent sur l'élément avant 12 afin de minimiser la taille globale du dispositif de pince à cheveux 10
- des moyens de verrouillage (B) conçus pour retenir lesdits éléments latéraux (13, 14) dans ladite position ouverte par rapport audit élément avant (12) ;
dans lequel lesdits moyens de verrouillage (B) comprennent alternativement (a) des premier et second éléments de retenue (16, 17) ou (b) un élément en porte-à-faux (160) ;
dans lequel pour l'alternative (a) lesdits premiers éléments de retenue (16) peuvent être fixés ou sont fixés auxdits éléments latéraux (13, 14) et lesdits seconds éléments de retenue (17) peuvent être fixés ou sont fixés audit élément ornemental (11a, 11b, 11c) ; lesdits premier et second éléments de retenue (16, 17) étant positionnés sur lesdits éléments latéraux (13, 14) et sur ledit élément ornemental (11a, 11b, 11c) de telle façon que :
dans ladite position ouverte, lesdits premiers éléments de retenue (16) viennent en prise avec lesdits seconds éléments de retenue (17) ;
- dans ladite position fermée lesdits premiers éléments de retenue (16) et lesdits seconds éléments de retenue (17) ne sont pas opérationnels et ne viennent pas en prise conjointement ;
- dans lequel pour l'alternative (b) ledit élément en porte-à-faux (160) s'étend principalement, de manière rectiligne ou sensiblement rectiligne, le long de ladite direction de développement (A) et dans lequel ledit élément en porte-à-faux (160) est solidaire de ou pouvant être fixé de manière amovible à une seconde extrémité (13b, 14b) desdits éléments latéraux (13, 14) ou est solidaire d'un composant supplémentaire (18, 19) pouvant être relié auxdits éléments latéraux (13, 14) et ledit élément en porte-à-faux (160) est conçu pour chevaucher au moins partiellement ledit élément ornemental (11a, 11b, 11c) lorsque lesdits éléments latéraux (13, 14) sont dans ladite position ouverte.

2. Dispositif de pince à cheveux (10) selon la revendication 1, dans lequel pour ladite alternative (a) lesdits éléments de retenue (16, 17) sont magnétiques ou magnétoréactifs de sorte qu'ils peuvent être accouplés magnétiquement conjointement et/ou sont conçus pour être accouplés mécaniquement conjointement.

3. Dispositif de pince à cheveux (10) selon la revendication 1 ou 2, dans lequel pour ladite alternative (a) lesdits premiers éléments de retenue (16) peuvent être fixés ou sont fixés à une seconde extrémité (13b, 14b) desdits éléments latéraux (13, 14), opposée à la première extrémité (13a, 14a), et dans lequel lesdits seconds éléments de retenue (17) peuvent être fixés ou sont fixés à ladite première extrémité (12a) et à ladite seconde extrémité (12b), de manière correspondante, dudit élément avant (12) et/ou dans lequel ledit élément ornemental (11a, 11b, 11c) s'étend entre une première extrémité (11a', 11b', 11c') et une seconde extrémité (11a", 11b", 11c"), le long de la direction de développement A, et lesdits seconds éléments de retenue (17) peuvent être fixés ou sont fixés à ladite première extrémité (11a', 11b', 11c') et seconde extrémité (11a", 11b", 11c") de l'élément ornemental.

4. Dispositif de pince à cheveux (10) selon la revendication 3, dans lequel pour ladite alternative (a) lesdits éléments de retenue (16, 17) comprennent une dent (16a) et un évidement (17a), mutuellement complémentaires, agencés de telle sorte que dans ladite position ouverte ladite dent (16a) vient en prise avec ledit évidement (17a) qui est accouplé à celui-ci afin de s'opposer au mouvement dans ladite position fermée ; dans lequel ladite dent (16a) ou ledit évidement (17a) sont solidaires de chacun desdits éléments latéraux (13, 14) ou sont solidaires d'un composant supplémentaire (18, 19) pouvant être fixé auxdits éléments latéraux (13, 14).

5. Dispositif de pince à cheveux (10) selon la revendication 4, dans lequel l'un ou l'autre parmi ledit évidement (17a) ou ladite dent (16a) est fourni sur ledit au moins un élément ornemental (11a, 11b ou 11c) et/ou sur ledit élément avant (12) de sorte que le mouvement dans la position fermée des éléments latéraux (13, 14) est suivi par la mise en prise de ladite dent (16a) avec ledit évidement (17a) et le verrouillage simultané dans la position fermée des éléments latéraux (13, 14) par rapport à l'élément avant (12) et à la retenue dudit élément ornemental (11a, 11b ou 11c) conjointement avec ledit élément avant (12).

6. Dispositif de pince à cheveux (10) selon l'une des revendications précédentes, dans lequel ledit élément ornemental (11a, 11b, 11c) est autonome par rapport audit élément avant (12) et des moyens sont fournis pour fixer temporairement ledit élément ornemental (11a, 11b, 11c) audit élément avant (12), lesdits moyens étant des moyens magnétiques ou des moyens mécaniques.

7. Dispositif de pince à cheveux (10) selon l'une des revendications précédentes, comprenant des éléments esthétiques auxiliaires conçus pour être fixés ou accouplés conjointement avec ledit élément avant (12) et/ou lesdits éléments latéraux (13, 14) et/ou un élément ornemental (11a, 11b, 11c) de manière magnétique et/ou mécanique et de manière interchangeable ou stable.

8. Dispositif de pince à cheveux (10) selon l'une des revendications précédentes, dans lequel ledit élément ornemental (11a, 11b, 11c) est conçu pour être accouplé audit élément avant (12) lorsque lesdits éléments latéraux (13, 14) sont dans ladite position ouverte et pour verrouiller lesdits éléments latéraux (13, 14) dans ladite position ouverte.

9. Dispositif de pince à cheveux (10) selon l'une des revendications précédentes, dans lequel ladite direction de développement (A) est sensiblement rectiligne et chacun desdits éléments latéraux (13, 14) s'étend le long de sa propre direction d'extension qui est sensiblement rectiligne et dans lequel, dans ladite position ouverte, ladite direction d'extension est sensiblement perpendiculaire à ladite direction de développement (A).

10. Dispositif de pince à cheveux (10) selon l'une des revendications précédentes, dans lequel ledit élément avant (12) et lesdits éléments latéraux (13, 14) sont mutuellement solidaires et liés par une partie d'articulation, déformable élastiquement ou plastiquement pour permettre le mouvement relatif dudit élément avant (12) et desdits éléments latéraux (13, 14).

11. Dispositif de pince à cheveux (10) selon l'une des revendications précédentes, dans lequel ledit élément avant (12) et lesdits éléments latéraux (13, 14) ont des zones recouvertes d'un matériau apte à empêcher le coulissement sur la tête de l'utilisateur, par exemple des zones recouvertes de silicone ; lesdites zones étant agencées dans des positions dudit élément avant (12) et desdits éléments latéraux (13, 14) destinées à venir en contact avec la tête de l'utilisateur lorsque ledit dispositif de pince à cheveux (10) est porté.

12. Dispositif de pince à cheveux (10) selon l'une des revendications précédentes, dans lequel ledit élément avant (12) et lesdits éléments latéraux (13, 14) sont reliés conjointement de façon amovible de sorte que lesdits éléments latéraux (13, 14) sont interchangeables par rapport audit élément avant (12) et inversement.

13. Dispositif de pince à cheveux (10) selon l'une des revendications précédentes, dans lequel ledit élément avant (12) et/ou lesdits éléments latéraux (13, 14) sont au moins partiellement incurvés afin de présenter au moins une portion concave par rapport à l'espace de réception de la tête de l'utilisateur, qui est partiellement entouré par ledit élément avant (12) et par lesdits éléments latéraux (13, 14) lorsqu'ils sont dans ladite position ouverte.

14. Dispositif de pince à cheveux (10) selon l'une des revendications précédentes comprenant un dispositif électrique ou électronique.

15. Dispositif de pince à cheveux (10) selon l'une des revendications précédentes, comprenant au moins un siège pour loger un dispositif électrique ou électronique sur un élément latéral (13, 14) et/ou sur l'élément avant 12 et/ou sur un élément ornemental (11a, 11b ou 11c).

16. Kit de pince à cheveux (100) comprenant un dispositif de pince à cheveux (10) selon l'une des revendications 1 à 15 et une pluralité desdits éléments ornementaux (11a, 11b, 11c) dans lequel les éléments ornementaux (11a, 11b, 11c) de ladite pluralité diffèrent en apparence afin de modifier l'apparence dudit dispositif de pince à cheveux (10) lorsqu'ils sont interchangés.

17. Kit de pince à cheveux (100) selon la revendication 16, dans lequel ledit dispositif de pince à cheveux (10) est fabriqué selon la revendication 6 et ledit kit de pince à cheveux comprend une pluralité desdits éléments esthétiques auxiliaires, dans lequel lesdits éléments esthétiques auxiliaires diffèrent en apparence afin de modifier l'apparence dudit dispositif de pince à cheveux (10) lorsqu'ils sont appliqués ou interchangés.

18. Kit de pince à cheveux (100) selon la revendication 17, dans lequel au moins l'un desdits éléments esthétiques auxiliaires et au moins l'un desdits éléments ornementaux (11a, 11b, 11c) sont esthétiquement complémentaires afin de former un ensemble apte à donner un aspect esthétique harmonieux à un dispositif de pince à cheveux (10) qui les comporte.
